# EUROPÄISCHE PATENTSCHRIFT

(11) **EP 0 480 227 B1**
(45) Veröffentlichungstag und Bekanntmachung des Hinweises auf die Patenterteilung: **22.02.1995**
(21) Anmeldenummer: 91116176.8
(22) Anmeldetag: 24.09.1991
(51) Int. Cl.: B01D 25/12

(54) **Filterplatte für Filterpresse**
Filter plate for filter press
Plaque de filtre pour filtre-presse

(30) Priorität: 08.10.1990 DE 4031831
(43) Veröffentlichungstag der Anmeldung: 15.04.1992
(73) Patentinhaber: RITTERSHAUS & BLECHER GMBH, 42369 Wuppertal (DE)
(72) Erfinder: Heinrich, Hans Jürgen, W-5828 Ennepetal (DE); Oelbermann, Max, W-5630 Remscheid (DE)
(74) Vertreter: Christl, Hermann, Dipl.-Ing.

(56) Entgegenhaltungen:
- EP-A- 0 066 752
- EP-A- 0 145 399
- DE-A- 2 549 747
- DE-U- 1 938 636
- SOVIET INVENTIONS ILLUSTRATED, Derwent Publications Ltd., London, GB; abstract no. 130437/16, week 9216; & SU-A-1662618 (KHIMVOLOKNO IND RES) 15. Juli 1991

## Beschreibung

Die Erfindung betrifft eine Filterplatte aus Kugelgraphitguß für Filterpressen, welche mit einem korrosionsbeständigen Überzug versehen ist.

Filterplatten von filterpressen werden regelmäßig hohen Druckbelastungen und je nach der Art der oft sehr aggressiven Trübe hohen Korrosionsangriffen ausgesetzt. Kugelgraphitguß weist neben seiner hohen Druckbelastbarkeit auch schon eine verhältnismäßig gute Korrosionsbeständigkeit auf, die aber für viele Trüben nicht ausreicht. Es ist bekannt, aus Kugelgraphitguß hergestellte Filterplatten deshalb mit einem Überzug aus einem korrosionsbeständigen Kunststoff zu versehen, indem man die Filterplatte entweder mit einer Lackschicht oder mit einer aufgesinterten Schicht aus Epoxidharz versieht. Die DE-U-1938636 beschreibt Platten mit einem Überzug aus Polyundecanamidin Butadien-Styrol-Copolymerisat. Derartige Kunststoffüberzüge zeichnen sich zwar durch eine befriedigende Korrosionsbeständigkeit aus, jedoch zeigt sich in der Praxis, daß diese Überzüge sich mit der Zeit von der Filterplatte ablösen. Diese Erscheinung ist allerdings ausschließlich im Bereich der vom Schließdruck beaufschlagten Flächen der Filterplatte zu beobachten, wo der verhältnismäßig weiche Kunststoffüberzug infolge des hohen Schließdruckes jedesmal in eine innige Haftverbindung mit den zwischen den Filterplatten eingespannten Filtertüchern oder Membranen gelangt. Nach mehrfachem Schließen und Wiederöffnen des Filterplattenpaketes löst sich der Kunststoffüberzug vom Kugelgraphitgußkern, weshalb solche Filterplatten nach verhältnismäßig kurzen Standzeiten ausgewechselt werden müssen.

Der Erfindung liegt die Aufgabe zugrunde, eine korrosionsbeständige Filterplatte hoher Standzeit zu schaffen.

Zur Lösung dieser Aufgabe ist erfindungsgemäß vorgesehen, daß der Überzug zumindest an den dem Filterpressenschließdruck ausgesetzten Flächen aus einer im Metallspritzverfahren, z. B. Flammspritzverfahren (flame plating), aufgebrachten Metallschicht besteht. Für diese Metallschicht ist jedes korrosionsbeständige Metall verwendbar, wobei aber der Erfindung zufolge der Überzug vorzugsweise aus Edelstahl, z. B. Chromnickelstahl, besteht.

Wie umfangreiche Erprobungen gezeigt haben, weist eine solche, im Metallspritzverfahren aufgebrachte Metallschicht außer einer hohen Korrosionsbeständigkeit eine äußerst feste Anhaftung am Kugelgraphitkern auf, die einer Verschweißfestigkeit nahe kommt. Darüber hinaus besitzen solche Metallschichten eine hohe Härte und Schlagunempfindlichkeit. Im Gesamtergebnis werden durch die Erfindung somit Filterplatten mit vergleichsweise sehr langen Standzeiten erreicht.

Gemäß einer Ausführungsart kann der Erfindung zufolge vorgesehen werden, daß die Filterplatte vollflächig mit der Metallschicht überzogen ist. Im Hinblick auf eine kostengünstigere Herstellbarkeit wird der Erfindung zufolge jedoch bevorzugt, daß die Filterplatte an ihren dem Filterpressenschließdruck nicht ausgesetzten Flächen mit einem korrosionsbeständigen Kunststoffüberzug, z. B. aus Epoxidharz, versehen ist.

Im Falle von Filterrahmenpressen sind die den Filterplatten zugeordneten Filterrahmen ebenfalls mit einem im Flammspritzverfahren aufgebrachten Überzug aus korrosionsbeständigem Metall versehen.

Die Erfindung wird im folgenden anhand der Zeichnung näher erläutert. In der Zeichnung zeigen :
- Fig. 1: in einer perspektivischen Darstellung eine Filterplatte für eine Kammerfilterpresse,
- Fig. 2: einen Schnitt gemäß der Linie II-II in Fig. 1 und
- Fig. 3: im Querschnitt eine Filterplatte mit zugeordnetem Filterrahmen einer Rahmenfilterpresse.

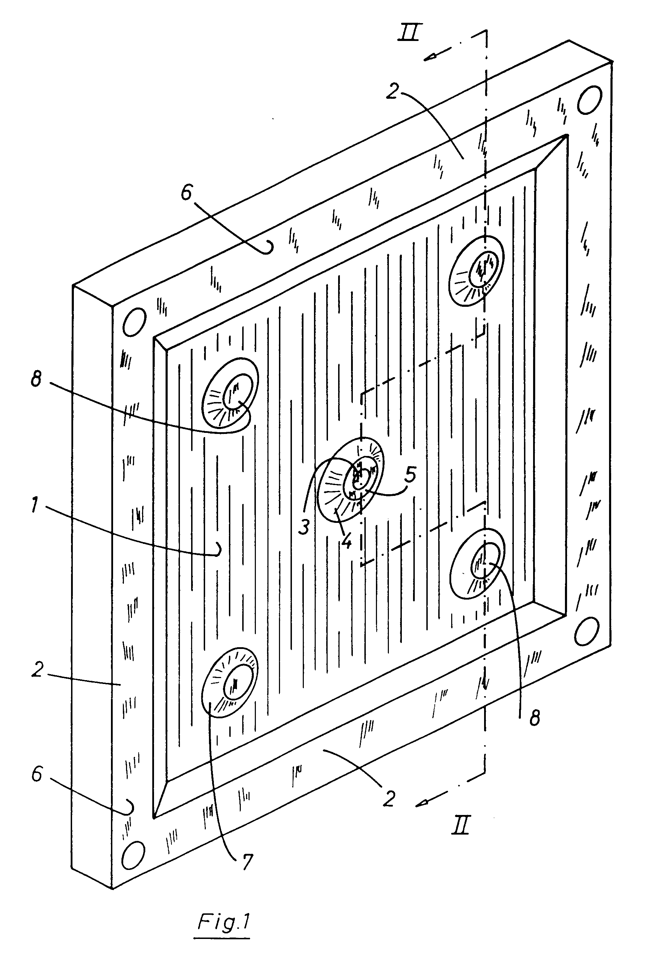

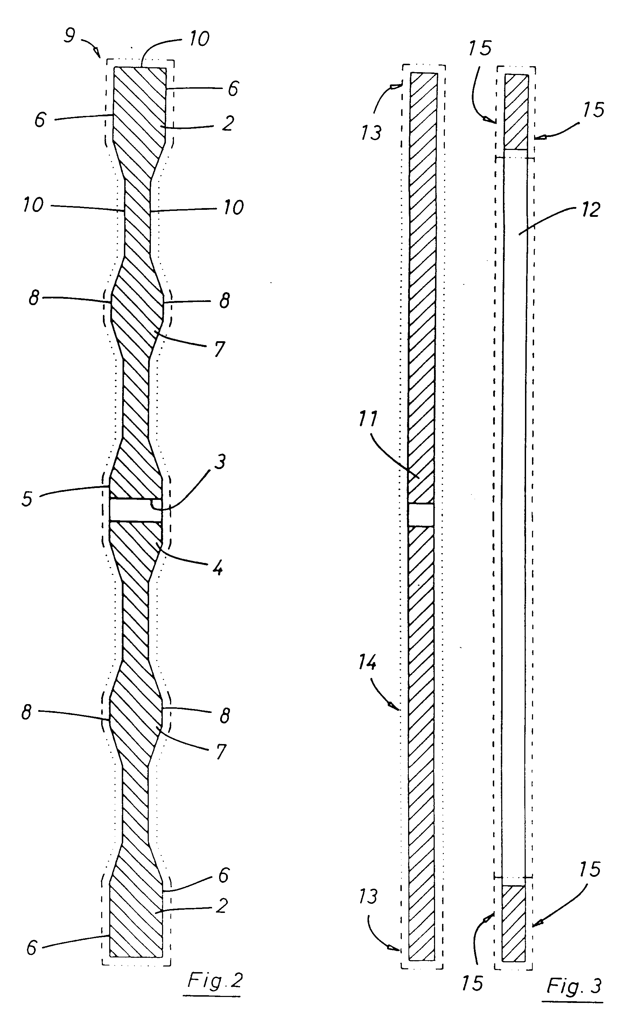

Die in den Fig. 1 und 2 gezeigte Filterplatte weist einen zentralen, mit Riefen versehenen Bereich 1 auf, der von einem erhabenen Randbereich 2 umschlossen ist, der in Verbindung mit dem Randbereich einer im Filterplattenpaket angrenzenden Filterplatte eine Filterkammer bildet. Beim gezeigten Ausführungsbeispiel handelt es sich um eine Filterplatte mit zentraler Trübezufuhröffnung 3, die mit einem erhabenen Rand 4 versehen ist, dessen Stirnfläche 5 in der gleichen Ebene wie die entsprechende Stirnfläche 6 des Randbereiches 2 liegen kann. Ferner sind im zentralen Bereich 1 der Filterplatte mehrere Stütznocken 7 vorgesehen, deren Stirnflächen 8 ebenfalls in derselben Ebene wie die Stirnflächen 6 des Randbereiches 2 liegen.

Wird ein aus den Filterplatten nach den Fig. 1 und 2 aufgebautes Filterplattenpaket geschlossen, kommen die benachbarten Kammerfilterplatten im Bereich ihrer Stirnflächen 5, 6 und 8 in Anlage, wobei gerade dort im Falle der modernen Hochdruckfilterpressen erhebliche Drücke auftreten.

Die Filterplatte nach den Fig. 1 bis 2 ist mit einem korrosionsbeständigen Überzug 9 versehen, der im Bereich der dem Schließdruck ausgesetzten Stirnflächen 5, 6, 8 aus einer im Flammspritzverfahren aufgetragenen Metallschicht, z. B. aus Edelstahl, besteht. In Fig. 2 ist der Überzug 9, soweit er aus dieser Metallschicht besteht, gestrichelt, angedeutet. An den zurückliegenden, nicht dem Schließdruck ausgesetzten Flächen 10 besteht der Überzug aus einem korrrosionsbeständigen Kunststoff, und an diesen Stellen ist in Fig. 2 der Überzug 9 durch punktierte Linien kenntlich gemacht.

Fig. 3 zeigt eine Filterplatte 11 mit einem zugeordneten Rahmen 12 einer Filterrahmenpresse. Auch hier ist die Filterplatte 11 an ihren dem Schließdruck ausgesetzten Flächen mit einer im Flammspritzverfahren aufgetragenen Metallschicht 13 versehen und im übrigen mit einer korrosionsbeständigen Kunststoffschicht 14 überzogen. Der Filterrahmen 12 ist ebenfalls an seinen beiden dem Schließdruck ausgesetzten Stirnflächen mit einer Metallschicht 15 nach der Erfindung beschichtet.

Die Erfindung ist nicht auf die dargestellten Ausführungsbeispiele beschränkt, sondern auch bei allen Ausführungsformen von Filterplatten anwendbar. Ebenfalls ist es möglich, die Filterplatten vollflächig nur mit den Metallschichten zu überziehen.

### Bezugszeichenliste

- 1: zentraler Bereich
- 2: Randbereich
- 3: Trübezufuhröffnung
- 4: Rand
- 5: Stirnfläche
- 6: Stirnfläche
- 7: Stütznocken
- 8: Stirnfläche
- 9: Überzug
- 10: Fläche
- 11: Filterplatte
- 12: Rahmen
- 13: Metallschicht
- 14: Kunststoffschicht
- 15: Metallschicht

## Patentansprüche

1. Filterplatte aus Kugelgraphitguß für Filterpressen, welche mit einem korrosionsbeständigen Überzug versehen ist, dadurch gekennzeichnet, daß der Überzug (9) zumindest an den dem Filterpressenschließdruck ausgesetzten Flächen (6, 5, 8) aus einer im Metallspritzverfahren, z. B. Flammspritzverfahren, aufgebrachten Metallschicht besteht.

2. Filterplatte nach Anspruch 1, dadurch gekennzeichnet, daß der Überzug (9) aus Edelstahl, z. B. Chrom-Nickel-Stahl, besteht.

3. Filterplatte nach den Ansprüchen 1 und 2, dadurch gekennzeichnet, daß die Filterplatte vollflächig mit der Metallschicht überzogen ist.

4. Filterplatte nach den Ansprüchen 1 und 2, dadurch gekennzeichnet, daß die Filterplatte an ihren dem Filterpressenschließdruck nicht ausgesetzten Flächen (10) mit einem korrosionsbeständigen Kunststoffüberzug, z. B. aus Epoxidharz, versehen ist.

5. Filterplatte nach einem oder mehreren der Ansprüche 1 bis 4, dadurch gekennzeichnet, daß im Fall von Filterrahmenpressen der der Filterplatte (11) zugeordnete Filterrahmen (12) ebenfalls mit einem im Flammspritzverfahren aufgebrachten Überzug aus korrosionsbeständigem Metall (15) versehen ist.

## Claims

1. Filter plate for filter presses, made of spheroidal graphite cast iron, which is equipped with a corrosion-resistant coating, characterized in that the coating (9), at least on those surfaces (6,5,8) which are exposed to the filter-press closure pressure, consists of a layer of metal applied by a metal-plating process, for example by flame-plating.

2. Filter plate as claimed in Claim 1, characterized in that the coating (9) consists of special steel, for example nickel chromium steel.

3. Filter plate as claimed in Claims 1 and 2, characterized in that the whole surface of the filter plate is covered by the metal layer.

4. Filter plate as claimed in Claims 1 and 2, characterized in that those surfaces (10) of the filter plate which are not exposed to the closure pressure of the filter press are equipped with a corrosion-resistant plastic coating, for example epoxy resin.

5. Filter plate as claimed in one or more of Claims 1 to 4, characterized in that in the case of filter-frame presses the filter-frame (12) allocated to each filter plate (11) is also equipped with a coating of corrosion-resistant metal (15) applied by the flame-plating process.

## Revendications

1. Plaque filtrante en fonte à graphite sphéroïdal, pour filtres-presses, pourvue d'un revêtement résistant à la corrosion, caractérisée en ce que le revêtement (9) est réalisé, au moins sur les surfaces (6,5,8) exposées à la pression de fermeture du filtre-presse, en une couche métallique, appliquée par un procédé de métallisation par projection, par exemple un procédé de projection à la flamme.

2. Plaque filtrante selon la revendication 1, caractérisée en ce que le revêtement (9) est en acier spécial, par exemple en acier nickel-chrome.

3. Plaque filtrante selon les revendications 1 et 2, caractérisée en ce que la plaque filtrante est recouverte sur la totalité de sa surface par la couche métallique.

4. Plaque filtrante selon les revendications 1 et 2, caractérisée en ce que la plaque filtrante est pourvue, sur ses surfaces (10) non exposées à la pression de fermeture du filtre-presse, d'un revêtement en matière synthétique résistant à la corrosion, par exemple en résine époxy.

5. Plaque filtrante selon l'une ou plusieurs des revendications 1 à 4, caractérisée en ce que, dans le cas de filtres presse à cadres, le cadre de filtre (12) associé à la plaque filtrante (11) est également pourvu d'un revêtement en métal résistant à la corrosion (15), appliqué par projection à la flamme.
